# EUROPÄISCHE PATENTSCHRIFT

(11) **EP 1 050 825 B1**
(45) Veröffentlichungstag und Bekanntmachung des Hinweises auf die Patenterteilung: **25.10.2006**
(21) Anmeldenummer: 99108183.7
(22) Anmeldetag: 26.04.1999
(51) Int. Cl.: G06F 13/40, H03K 19/0175

(54) **Bussignalempfangseinheit für einen 2-Draht-Bus sowie Installationsverfahren für einen 2-Draht-Bus**
Receiving unit for bus signals on a two-wire bus and method of installing a two-wire bus
Unité de réception pour signaux de bus à deux fils et procédé d'installation d'un bus à deux fils

(43) Veröffentlichungstag der Anmeldung: 08.11.2000
(73) Patentinhaber: Feller AG, 8810 Horgen (CH)
(72) Erfinder: Wichert, Stefan, 8852 Altendorf (CH); Zurlinden, Jonas, 8046 Zürich (CH); Stalder, Martin, 8906 Bonstetten (CH)
(74) Vertreter: Blum, Rudolf Emil

(56) Entgegenhaltungen:
- EP-A- 0 749 070
- DE-A- 4 403 899
- US-A- 4 423 506
- US-A- 4 604 741
- US-A- 4 987 366
- US-A- 5 089 974

## Beschreibung

Die Erfindung betrifft eine Bussignalempfangseinheit gemäss Oberbegriff des Anspruchs 1. Ferner betrifft die Erfindung eine 2-Draht-Busanordnung gemäss Anspruch 8 sowie deren Verwendung. Weiter betrifft die Erfindung ein Verfahren zur Installation einer 2-Draht-Busanordnung nach Anspruch 11 oder 12 sowie dessen Anwendung.

Ein 2-Draht-Bus, insbesondere zur Verwendung als Bus für Gebäude-Automationssysteme, wird in EP-A-0 749 070 gezeigt. Dort besitzen die einzelnen Busteilnehmer jeweils eine Busspeiseeinheit und der Bus wird durch mehrere Busteilnehmer gespiesen, so dass sich eine dezentrale Busspeisung bildet, wobei die Einspeiseknotenpunkte auch auf dem Bus wandern können. Auch eine Ausführungsform mit einem zentralen Speisegerät, welches signalmässig nicht am Informationsaustausch auf dem Bus teilnimmt, wird gezeigt. Die Signalbildung erfolgt durch ein Herabziehen der Busspannung durch die sendenden Busteilnehmer, was durch die Busspeisung mit einer bei Belastung mit vorbestimmter Kennlinie abfallenden Busspannung ermöglicht wird. Bei dem genannten Bussystem ergibt sich der Nachteil, dass auch im Kurzschlussfall auf dem Bus ein Strom fliesst, was zu einer unerwünschten Erwärmung der speisenden Geräte führt. Da ferner die Speisung dezentral erfolgt, kann die Feststellung des Vorliegens eines Kurzschlusses und dessen Auffindung bei dem bekannten Bussystem aufwendig sein. US-A-4 604 741 zeigt die Übertragung von Sprachsignalen und amplitudenmodulierten Datensignalen auf Telefonleitungen, wobei eine Stromdetektion als Kurzschlusssensor dient. DE-A-4 403 899 zeigt ein 2-Draht-Bussystem, bei welchem trotz eines Kurzschlusses noch definierte Signalpegel übertragbar sind.

Der Erfindung liegt deshalb die Aufgabe zugrunde, den Nachteil beim erstgenannten 2-Draht-Bus zu vermeiden.

Dies wird bei einer Bussignalempfangseinheit der eingangs genannten Art mit den kennzeichnenden Merkmalen des Anspruchs 1 gelöst.

Dadurch, dass die Bussignalempfangseinheit einen Kurzschluss erkennen und ihren Speiseteil ausschalten kann, wird der Bus im Kurzschlussfall stromlos geschaltet. Dies erlaubt das sichere Erkennen des Vorliegens einer Kurzschlusssituation auf dem Bus und die Möglichkeit einer Lokalisierung desselben ohne störende Stromeinspeisung durch die Bussignalempfangseinheit.

Das Bussystem gemäss EP-A-0 749 070 bedarf weiter einer besonders sorgfältigen Installation, da bei einer Verpolung der mehreren speisenden Busteilnehmer sich eine undefinierte Spannungssituation auf dem Bus ergibt, welche im Bereich der positiven bis negativen Busspeisespannung liegen kann und welche zudem schwanken kann, da sich eine unterschiedliche Selbsterwärmung der speisenden Busteilnehmer aufgrund eines Busstromes selbst im Ruhezustand des Busses ergibt.

Der Erfindung liegt daher weiter die Aufgabe zugrunde, ein einfaches Businstallationsverfahren zu schaffen, bei welchem das Auftreten von Installationsfehlern möglichst ausgeschlossen ist.

Diese Aufgabe wird einerseits mit den kennzeichnenden Merkmalen des Anspruchs 11 gelöst.

In diesem Fall ist lediglich eine Bussignalempfangseinheit mit ihrem Speiseteil am Bus angeschlossen, wobei die Polung des Anschlusses an der 2-Draht-Busleitung beliebig erfolgen kann, und die Bussignalsendeeinheit ist ebenfalls beliebig gepolt anschliessbar, so dass bei der Installation keine Installationsfehler durch Verpolung möglich sind.

Die Aufgabe wird weiter alternativ mit den kennzeichnenden Merkmalen des Anspruchs 12 gelöst.

In diesem Fall ist mehr als eine Bussignalempfangseinheit, umfassend jeweils ein Speiseteil, am Bus angeschlossen. Gemäss der Erfindung wird indes nur ein Speiseteil als Busspeiseteil aktiv und die anderen Busspeiseteile der anderen Bussignalempfangseinheiten werden deaktiviert, so dass sie den Bus nicht beeinflussen können. Dies ermöglicht ebenfalls den beliebig gepolten Anschluss sowohl des einen speisenden als auch des oder der anderen nichtspeisenden Bussignalempfangseinheiten am Bus. Auch in diesem Fall sind die Bussignalsendeeinheiten beliebig gepolt anschliessbar. Es ergibt sich somit auch für diesen Fall eine Installation, bei welcher keine Verpolungsfehler möglich sind.

Bevorzugterweise sind die Bussignalempfangseinheiten mit einer Verpolungsschutzschaltung ausgerüstet, so dass bei einem Installationsfehler, bei welchem der Busspeiseteil einer nicht als Busspeisung bestimmten Bussignalempfangseinheit nicht deaktiviert ist und diese zudem gegenüber der Speisung der als Busspeisung bestimmten Bussignalempfangseinheit verpolt ist, der Bus durch Abschaltung der Busspeisungen spannungs- und stromlos geschaltet ist.

Dadurch, dass beim bevorzugten Verfahren die Bussignalsendeeinheit einen beliebig gepolten Anschluss an den 2-Draht-Bus erlaubt, werden Installationsfehler durch Verpolung vermieden. Bevorzugt ist ein Gleichrichter als Buseingangselement der Sendeeinheit vorgesehen, welche bevorzugterweise ein IR-Signalempfänger ist.

Ferner liegt der Erfindung die Aufgabe zugrunde, eine 2-Draht-Busanordnung zu schaffen, welche möglichst einfach und fehlerfrei installierbar ist.

Dies wird durch die Busanordnung nach Anspruch 8 erreicht.

Im folgenden werden Ausführungsbeispiele der Erfindung anhand der Zeichnungen näher erläutert. Dabei zeigt
Figur 1 schematisch eine Darstellung einer 2-Draht-Busleitung mit daran angeschlossenen Busteilnehmern;
Figur 2 ein Blockschaltbild einer Bussignalempfangseinheit; und
Figur 3 ein Blockschaltbild einer Bussignalsendeeinheit.

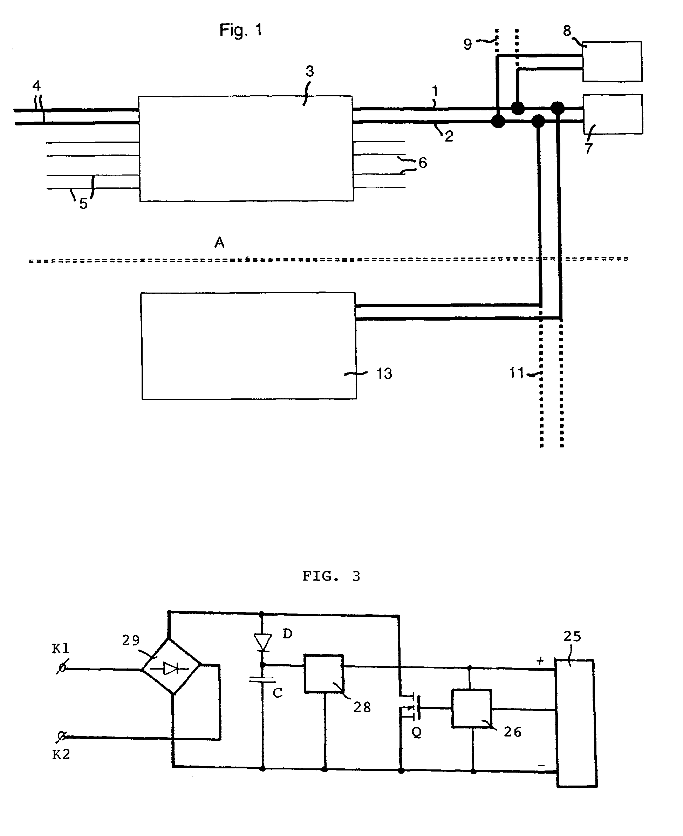

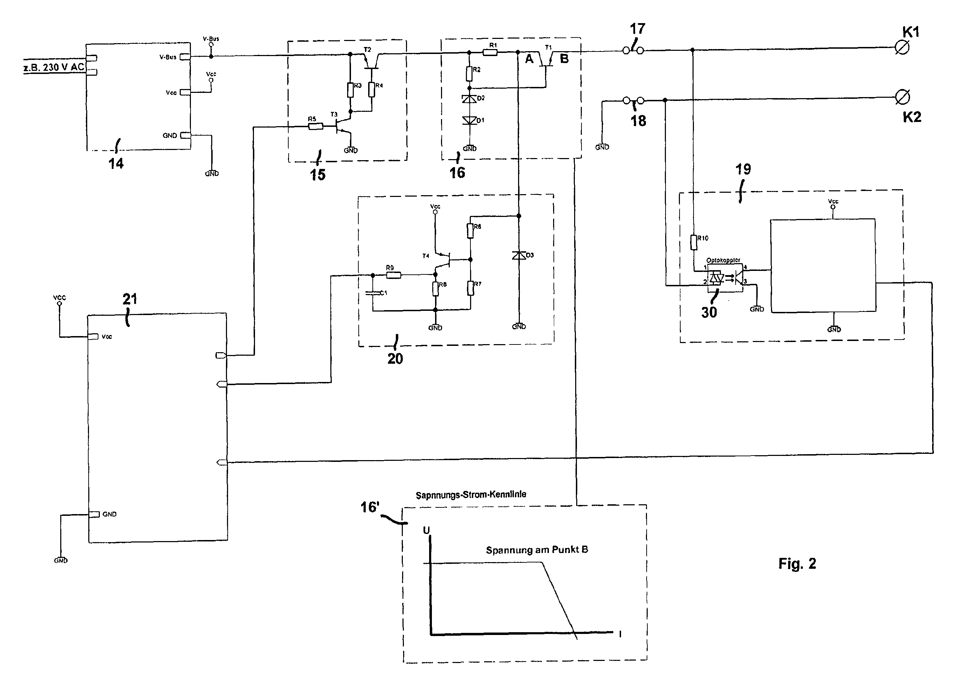

Figur 1 zeigt ein Blockschema der 2-Draht-Busanordnung in zwei verschiedenen Varianten, wobei die eine Variante nur oberhalb der unterbrochenen Linie A dargestellt ist und die zweite Variante das Schaltbild oberhalb der unterbrochenen Linie A mit den weiteren Teilen unterhalb der Linie A umfasst. Erläutert wird zunächst ein Ausführungsbeispiel, welches nur die Elemente oberhalb der unterbrochenen Linie A umfasst. Gezeigt ist dabei ein 2-Draht-Bus mit den Busleitungen 1, 2. An dem Bus sind Busteilnehmer 3, 7 und 8 angeschlossen. Der Busteilnehmer 3 ist in dem gezeigten Beispiel eine Bussignalempfangseinheit, welche den Bus speist. Zu diesem Zweck sind Speiseleitungen 4, z.B. für Netzspannung, dargestellt, mittels welchen die Versorgungsspannung an die Einheit 3 angelegt wird. Die Bussignaleinheit 3 kann ferner weitere, vom Bus unabhängige Eingangsleitungen 5 aufweisen oder sie kann an einen weiteren Bus angeschlossen sein. An der Einheit 3 sind ferner Ausgangsleitungen 6 dargestellt, mittels welchen durch die Einheit Schaltsignale an zu bedienende Geräte abgegeben werden, so z.B. an Lampen oder an Motoren von Storen, gemäss der bevorzugten Verwendung des beschriebenen Bussystemes bei der Steuerung von Verbrauchern in Gebäuden. An den Bus angeschlossen sind weitere Busteilnehmer 7, 8 dargestellt, welche in der gezeigten Variante nicht speisefähige Busteilnehmer sind, d.h. keine Betriebsspannung für den Bus 1, 2 liefern. Mit den unterbrochenen Linien 9 ist dargestellt, dass weitere solche Busteilnehmer am Bus 1, 2 angeschlossen sein könnten. Die oberhalb der Linie A gezeigte Variante der Busanordnung weist also eine Bussignalempfangseinheit 3 auf, welche die Betriebsspannung für den Bus liefert und weist mehrere Bussignalsendeeinheiten 7, 8 auf, welche Signale auf den Bus senden und ihre Betriebsspannung aus dem Bus beziehen. Die Busteilnehmer 7, 8 sind dabei in einem bevorzugten Ausführungsbeispiel Infrarotsensoren, welche ihre Signale auf den Bus in Abhängigkeit von durch sie empfangenen Infrarotsignalen senden. Diese Signale werden z.B. von einer Bedienungsperson mittels einer Infrarotfernsteuerung an die Infrarotsensoren 7, 8 ausgesandt, um eine Funktion von elektrischen Verbrauchern im Gebäude, z.B. Lampen oder Storen zu bewirken. Die Bussignalempfangseinheit 3 empfängt die auf den Bus gegebenen Signale, wertet diese aus und bewirkt über ihre Schaltausgänge 6 die Aktivierung oder die Deaktivierung der genannten elektrischen Verbraucher gemäss den Befehlen der Bedienungsperson der Infrarotfernsteuerung. Diese beschriebene Verwendung ist als bevorzugtes Ausführungsbeispiel zu verstehen. Die Bussignalsendeeinheiten 7, 8 können natürlich auch andere Sensoren, z.B. Temperatur-, Feuchte-, oder Windgeschwindigkeitssensoren sein, welche Bussignale aussenden, die von der Bussignalempfangseinheit 3 empfangen und ausgewertet werden. Die Signalübermittlung auf dem Bus 1, 2 erfolgt auf grundsätzlich bekannte Weise, indem die Busspeisung eine abfallende Kennlinie aufweist, wie dies in der Spannungs-Strom-Kennlinie 16' von Figur 2 dargestellt ist. Die sendenden Busteilnehmer 7, 8 erzeugen dabei die Bussignale durch ein Kurzschliessen der Busspannung, was den Busstrom derart ansteigen lässt, dass die Busspannung gemäss der Kennlinie 16' abfällt. Die Bussignale der signalsendenden Einheiten 7, 8 können dabei zu Bustelegrammen mit entsprechend der zu sendenden Nachricht kurzzeitig abfallender Busspannnung zusammengefasst sein.

Gemäss einem ersten Aspekt der Erfindung soll eine derartige Busanordnung so geschaffen werden, dass ein Kurzschluss des Busses, welcher sowohl bei der Erstinstallation des Busses auftreten kann als auch im weiteren Betrieb entstehen kann, auf einfache Weise erkennbar ist, und es soll die Fehlersuche auf dem Bus möglichst erleichtert werden. Dies wird dadurch erreicht, dass die Bussignalempfangseinheit 3 ein Detektionsmittel aufweist, mittels welchem sie einen Buskurzschluss von den Bussignalen, welche ebenfalls in der Form von Kurzschlüssen auftreten, unterscheiden kann. Stellt die Buseinheit 3 einen Kurzschluss fest, so unterbricht sie die Busspeisung, so dass an den Leitungen 1, 2 keine Busspannung mehr anliegt und auch kein Busstrom mehr fliesst. Dies schafft einen definierten Buszustand, bei welchem die Busanordnung nicht mehr funktionsfähig ist und bei welchem kein Strom fliesst. Dieser definierte Buszustand zeigt einerseits das Vorhandensein eines Kurzschlusses an und verhindert das Vorliegen von Signalen auf dem Bus, was die ganze Anordnung in einen definierten Zustand versetzt. Die Spannungs- und Stromlosigkeit des Busses erlaubt ferner eine einfache Suche nach der Kurzschlussstelle.

Figur 2 zeigt ein Schaltbild einer Bussignalempfangseinheit 3, wie sie in Figur 1 dargestellt worden ist. Diese Bussignalempfangseinheit 3 weist einerseits ein Netzteil 14 auf, an welchem die Netzspannung anliegt, und welches die Betriebsspannung V-Bus zur Speisung des Busses bereitstellt sowie eine Betriebsspannung VCC für die Bussignalempfangseinheit selber. Die Betriebsspannung V-Bus wird an einen Schalter 15 geführt, welcher zusammen mit der Auswerteschaltung bzw. Auswertelogik 21 das Ausschalt-/Einschaltmittel für die Busspannung bildet. Der Schalter 15 legt die Betriebsspannung V-Bus an die Spannungsquelle 16 an, welche die Busspannung mit der stromabhängigen Kennlinie 16' bildet, wie dies bereits erläutert worden ist. Über ein Deaktivierungsmittel, welches im gezeigten Beispiel als Steckbrücke 17 bzw. 18 ausgebildet ist, gelangt die Busspannung an die Klemmen K1 und K2, an welchen die Busleitungen 1, 2 angeschlossen werden. Zur Auswertung der Bussignale ist eine Signalauswertungsschaltung 19 vorgesehen, welche die Bussignale an die Auswertelogik 21 abgibt, welche nicht dargestellte Ausgangssignale abgibt, welche schlussendlich über die Leitungen 6 von Figur 1 einen Verbraucher schalten oder steuern. Ebenfalls nicht dargestellt sind in der Figur 2 die Eingangsleitungen 5, welche ebenfalls zur Auswertelogik 21 führen. Ferner ist eine Detektionsschaltung 20 vorgesehen, welche einen Kurzschluss auf dem Bus erfasst und zusammen mit der Auswertelogik 21 das Detektionsmittel bildet.

Figur 3 zeigt ein Schaltbild eines der Busteilnehmer 7, 8, welche den Bus nicht speisen, aber Bussignale aussenden. Im gezeigten Beispiel ist die Bussignalsendeeinheit 7 oder 8 ein Infrarotempfänger, welcher einen Infrarotsensor 25 aufweist, der aus dem Bus gespiesen wird. Der Bus ist an den Klemmen K1 und K2 angeschlossen und speist über einen Gleichrichter 29 und eine Spannungsversorgungsschaltung 28 den Infrarotsensor 25 mit Betriebsspannung. Der Infrarotsensor umfasst ein grundsätzlich bekanntes Sensorelement für infrarotes Licht. Dessen Ausgangssignal IR wird an einen Vorverstärker 26 abgegeben, welcher sein Ausgangssignal an den Steuereingang des Transistors Q abgibt. Dieser schliesst die Busleitung kurzzeitig kurz, so dass z.B. ein Strom von 75 mA über den Transistor Q fliesst, welcher aufgrund der Spannungs- Strom- Kennlinie 16' ein Zusammenbrechen der Busspannung bewirkt. Aufgrund der Infrarotsignale eines Infrarotsenders werden somit entsprechende Bussignale als kurzzeitige Buskurzschlüsse erzeugt. Die Busteilnehmer 7 und/oder 8 können zusätzlich als Empfänger von Bussignalen ausgestaltet sein und z.B. Sollwerte oder Anzeigeninformation über den Bus empfangen, so z.B. wenn der Busteilnehmer ein Temperatursensor ist.

Die Bussignale gelangen über die Busleitungen 1, 2 an die Bussignalempfangseinheit 3 bzw. an deren Signalauswerteschaltung 19. Die Busspannung speist dort z.B. einen Optokoppler 30 (auf welchen indes bei dem hier geschilderten Beispiel mit nur einer speisenden Bussignalempfangseinheit 3 auch verzichtet werden könnte) und die von der Schaltung 19 empfangenen und auf die Spannung VCC umgesetzten Signale werden an die Auswertelogik 21 abgegeben, welche aufgrund der Signalfolge die entsprechenden Befehle ausführt. Bei der Bussignalempfangseinheit ist nun eine Detektionsschaltung 20 vorgesehen, welche zusammen mit der Auswertelogik 21 ein Detektionsmittel für einen Buskurzschluss bildet, wobei dieser von den den Bus ebenfalls kurzschliessenden Bussignalen unterschieden wird. Zu diesem Zweck ist die Detektionsschaltung 20 am Punkt A mit der Spannungsquelle 16 verbunden. Gemäss deren Kennlinie sinkt bis zu einem bestimmten Strom, welcher auf dem Bus fliesst, nur die Spannung A, währenddem am Punkt B eine konstante Spannung anliegt. Die Schaltung mit dem Transistor T1 arbeitet dabei im linearen Bereich. Steigt der fliessende Strom weiter, so setzt die Strombegrenzung ein, indem der Transistor T1 gesättigt wird und die Spannung am Punkt B (und damit auch am Punkt A) stark zurückgeht. Die Stromschwelle, d.h. der Knickpunkt in der Spannungs-Strom-Kennlinie, ist im wesentlichen durch die Zenerdiode D2 und den Widerstand R1 bestimmt. Bei einem Kurzschluss auf dem Bus sinkt das Potential auf dem Bus nahe gegen Masse. Mittels der Spannungsteilers R6/R7, der auch als Pegelwandler von der Betriebsspannung V-Bus auf die Speisespannung der Auswertelogik dient, wird die Spannungsschwelle eingestellt, bei welcher der Transistor T4 der Detektionsschaltung 20 bei sinkendem Potential des Punktes A umschaltet, wobei mit R9/C1 ein Tiefpass vorgesehen ist, welcher so eingestellt ist, dass bei Bussignalen (kurzzeitige Kurzschlüsse) der Kurzschlussschutz noch nicht anspricht. Übersteigt hingegen die Dauer des Kurzschlusses die Signaldauer, so wird ein Detektionssignal von der Detektionsschaltung 20 an die Auswertelogik 21 abgegeben und diese schaltet über den Schalter 15 bzw. den Transistor T2 die Busspeisung aus. Die zeitliche Unterscheidungsschwelle zwischen Bussignalen und Buskurzschluss kann dabei z.B. so eingestellt werden, dass ein ganzes Bustelegramm, welches z.B. 19 Kurzschlüsse von ca. 36 Mikrosekunden Dauer innerhalb von ca. 15 Millisekunden umfassen kann, noch nicht zum Ansprechen des Kurzschlussschutzes führt. Ein längeres Kurzschliessen hingegen führt zum Ansprechen und zum Abschalten der Busspeisung. Natürlich kann anstelle des gezeigten Zeitgliedes mit R9/C1 auch ein anderes Zeitglied vorgesehen sein, welches die kurzzeitigen Kurzschlüsse der Signalübertragung von einem tatsächlichen Kurzschluss unterscheidet. So kann z.B. in der Auswertelogik 21, welche in der Regel von einem Mikroprozessor gebildet wird, ein Zähler vorgesehen sein, welcher ein Zeitglied zur Unterscheidung bildet.

Die beschriebene Signalempfangseinheit kann also mittels ihres Detektionsmittels 20, 21 und ihres Ausschaltmittels 15, 21 einen Kurzschluss erkennen und die Busspeisung ausschalten. Das erneute Einschalten der Busspeisung erfolgt ebenfalls mittels des Ausschalt-/Einschaltmittels 15, 21, wobei dies nach einem gewissen Zeitablauf selbsttätig von der Auswerteschaltung 21 veranlasst werden kann oder z.B. durch ein externes Signal, welches die Auswerteschaltung 21 erreicht. Liegt nach dem Einschalten der Busspeisung weiterhin eine Kurzschlusssituation vor, so erfolgt durch das Detektionsmittel 20, 21 erneut eine Abschaltung der Busspeisespannung.

Die Installation der beschriebenen Bussignalanordnung erweist sich als äusserst einfach. Da nur die eine Busspeisung in der Bussignalempfangseinheit 3 vorhanden ist, können die Busleitungen 1, 2 in beliebiger Polung an die Klemmen K1 und K2 der Einheit 3 angeschlossen werden. Die Bussignalsendeeinheiten 7 und 8 sind so ausgeführt, dass sie mit beliebiger Polung an den Bus angeschlossen werden können. Mittels des Gleichrichters 29 ist ihre korrekte Speisung in jedem Fall sichergestellt. Die Signaleinspeisung in den Bus mittels des die Busleitungen kurzschliessenden Transistors Q ist nicht auf eine bestimmte Polung angewiesen und ebensowenig benötigt die Signalauswerteschaltung 19 der Bussignalempfangseinheit 3 eine spezielle Polung. Bei der Installation eines solchen Busses gemäss der Erfindung besteht daher keine Notwendigkeit, beim Anschluss der Busteilnehmer eine bestimmte Verpolung einzuhalten und somit auch keine Gefahr, dass durch Nichteinhaltung einer Polungsvorschrift ein Installationsfehler vorkommt. Durch die Kurzschlussabschaltung werden ferner auch Installationsfehler, die zu einem Kurzschluss führen, auf einfache Weise erkennbar und die Kurzschlussstelle leichter ermittelbar.

Im Hinblick auf Figur 1 wird nun eine Variante der Erfindung beschrieben. Dabei kommt mindestens ein weiterer Busteilnehmer 13 hinzu, welcher ebenfalls über ein Busspeiseteil verfügt und somit busspeisefähig ist. In Figur 1 ist dieser Teilnehmer 13 unterhalb der Linie A dargestellt und an den Bus angeschlossen. Durch die unterbrochenen Leitungen 11 wird angedeutet, dass weitere solche busspeisefähigen Teilnehmer an den Bus angeschlossen sein könnten.

Beim Anschluss mehrerer busspeisefähiger Busteilnehmer am Bus 1, 2 stellt sich das Problem, dass eine Verpolung der Speisungen zu einem undefinierbaren Buszustand führt und der Fehler unter Umständen nur schwierig zu ermitteln ist. Gemäss dieser Variante der Erfindung erfolgt daher die Installation der Busanordnung derart, dass nur einer der busspeisefähigen Busteilnehmer als Busspeisung bestimmt wird und die Busspeisung der anderen Busteilnehmer deaktiviert wird. Auf diese Weise ergibt sich ebenfalls eine sehr einfache Installation, indem z.B. die Bussignalempfangseinheit 3 als speisender Busteilnehmer bestimmt wird und deren Speisung aktiviert wird, während die weitere Bussignalempfangseinheit 13 und allfällige noch weitere Bussignalempfangseinheiten als nicht speisende Einheiten eingesetzt werden, indem ihre Busspeiseteile deaktiviert werden. Bei der Installation braucht dann wiederum die Polung nicht beachtet zu werden, indem die Einheit 3 mit beliebiger Polung an die Busleitungen 1, 2 angeschlossen werden kann und dies auch für die weiteren Busteilnehmer gilt.

Figur 2 zeigt eine Ausführungsform der Bussignalempfangseinheit, bei welcher die Deaktivierung der Busspeisung durch eine entfernbare Steckbrücke 17 erfolgt. Ist diese Steckbrücke entfernt, so ist die Leitung V-Bus des Speiseteils 14 nach dem Schalter 15 und der Spannungsquellenschaltung 16 vom Bus getrennt, so dass diese Speiseteile nicht mit dem Bus verbunden sind. Sofern dies gewünscht ist, kann auch eine weitere Steckbrücke 18 zur vollständigen Potentialtrennung der Busseite von der übrigen Geräteelektronik vorgesehen sein. Wird die Steckbrücke 17 entfernt, so dass die Bussignalempfangseinheit als nicht speisender Busteilnehmer eingesetzt ist, so sind im wesentlichen nur die Schaltungsteile 19 und 21 zum Empfang der Bussignale in Betrieb. Anstelle der Ausführungsvariante mit Steckbrücke 17 könnte z.B. auch eine Ausführungsform mit drei Ausgangsklemmen vorgesehen sein, wobei ein Klemmenpaar für die Signaldetektion nicht busspeisend geschaltet ist und die dritte Klemme mit einer Klemme des ersten Klemmenpaars zur Speisung des Busses und Signaldetektion dient. Auch in diesem Fall kann der Installateur durch entsprechende Beschaltung der Klemmen die Bussignalempfangseinheit als nicht speisende bzw. speisende Einheit des Busses bestimmen.

Bevorzugterweise ist bei der Bussignalempfangseinheit weiter ein Verpolungsschutzmittel vorgesehen, welches bei der Verpolung von Busspannungen zweier Busspeiseteile eine Abschaltung der Busspannung mindestens eines der Geräte bewirkt. Diese Ausführungsform wird vorgesehen, da bei der Installation auf fehlerhafte Weise doch mehr als eine Einheit als busspeisende Einheit eingesetzt werden kann. So kann z.B. bei der beschriebenen Ausführung, wo nur die Einheit 3 den Bus speist, es vergessen werden, beim Busteilnehmer 13 die Steckbrücke 17 zu entfernen. Da bei der Installation eben gerade keine Polungsvorschrift zu beachten ist, kann es passieren, dass die aufgrund des Fehlers beide den Bus speisenden Busteilnehmer 3 und 13 gegeneinander verpolte Speiseteile aufweisen. Es ist daher bevorzugterweise ein Verpolungsschutzmittel vorgesehen, welches im gezeigten Beispiel mit der Detektionsschaltung 20 für den Kurzschlussfall kombiniert ist. Die Diode D3 der Schaltung 20 bewirkt bei verpolt angeschlossenen speisenden Teilnehmern einen Dauerkurzschluss. Die Spannung auf dem Bus fällt zusammen, wobei das Potential des Punktes A der Schaltung 16 um höchstens die Diodenflussspannung von D3 negativ gegenüber Masse wird. Es tritt somit der Kurzschlussfall ein, welcher wiederum über die Auswerteschaltung 21 zum Abschalten der Busspeisung mittels des Schalters 15 führt. Da beide Teilnehmer 3 und 13 mit dieser Schaltung versehen sind, werden beide ihre Busspeiseteile abschalten und der Bus wird aufgrund der Verpolung der Busspeiseteile bzw. aufgrund der Verpolungsschutzmittel spannungs- und stromlos. Dies ist wiederum ein Anzeigemittel dafür, dass ein Fehler vorliegt. Dieser ist durch Kontrolle der Steckbrücken leicht ermittelbar.

Beim korrekten Anschluss der Bussignalempfangseinheit 13 mit entfernter Steckbrücke 17 und somit ohne Busspeisung durch die Einheit 13 kann diese, wie an sich bereits erläutert, mit beliebiger Polung an den Bus angeschlossen werden, da die Signalauswerteschaltung 19 den dargestellten Optokoppler 30 aufweist, der unabhängig von der Busspeisespannungspolung den Empfang von Bussignalen erlaubt.

Die als Ausführungsbeispiele dargestellten Busteilnehmer 3 und 13 sind als Bussignalempfangseinheiten dargestellt worden. Diese Busteilnehmer 3 und 13 könnten auch so erweitert sein, dass sie ebenfalls als Bussignalsendeeinheiten wirken können. Sie sind dann mit entsprechenden Sendeteilen ausgestattet, so dass sie zum bidirektionalen Busbetrieb fähig sind.

## Patentansprüche

1. Bussignalempfangseinheit (3, 13) für einen 2-Draht-Bus (1, 2), auf welchem die sendenden Busteilnehmer (7, 8) die Bussignale durch ein Kurzschliessen der Busspannung erzeugen, welche Bussignalempfangseinheit ein Busspeiseteil (14, 15, 16) zur Erzeugung der Busspannung mit einer beim Kurzschliessen derselben definiert abfallenden Spannungs-Strom-Kennlinie (16') und eine das Kurzschliessen der Busspannung als Bussignale erkennende Signalauswerteschaltung (19) und Auswertelogik (21) umfasst, **gekennzeichnet durch** ein Detektionsmittel (20) mit einem Zeitglied zur Unterscheidung von Bussignalen von einem Buskurzschluss sowie ein auf das Detektionsmittel ansprechendes Ausschalt/Einschaltmittel (15) für den Busspeiseteil.

2. Bussignalempfangseinheit (3, 13) nach Anspruch 1, **dadurch gekennzeichnet, dass** diese mit einem Deaktivierungsmittel (17, 18), vorzugsweise einer Steckbrücke, versehen ist, mittels welchem der Busspeiseteil (14, 15, 16) vom Bus (1, 2) trennbar ist.

3. Bussignalempfangseinheit (3, 13) nach Anspruch 1 oder 2, **dadurch gekennzeichnet, dass** das Detektionsmittel (20) ein Verpolungsschutzmittel (D3) aufweist, welches zum Ausschalten des Busspeiseteils der Bussignalempfangseinheit (3) beim Vorliegen einer gegenüber der von der Bussignalempfangseinheit erzeugten Busspannung verpolt am Bus liegenden weiteren Busspannung einer weiteren Bussignalempfangseinheit (13) mittels des Ausschalt/Einschaltmittels (15) ausgestaltet ist.

4. Bussignalempfangseinheit (3, 13) nach Anspruch 3, **dadurch gekennzeichnet, dass** das Verpolungsschutzmittel zur Erzeugung eines Kurzschlusses der Busspannung beim Anliegen der verpolten weiteren Busspannung ausgestaltet ist.

5. Bussignalempfangseinheit (3, 13) nach einem der Ansprüche 1 bis 4, **dadurch gekennzeichnet, dass** das Zeitglied ein Tiefpass (R9, C1) oder ein Zähler ist.

6. Bussignalempfangseinheit (3, 13) nach einem der Ansprüche 1 bis 5, **dadurch gekennzeichnet, dass** die Signal auswerteschaltung (19) zum verpolungsunabhängigen Empfang von Bussignalen ausgestaltet ist.

7. Bussignalempfangseinheit (3, 13) nach einem der Ansprüche 1 bis 6, **dadurch gekennzeichnet, dass** diese mit einem Signalsendeteil zur Abgabe von Bussignalen ausgestattet ist.

8. 2-Draht-Busanordnung umfassend mindestens einen 2-Draht-Bus (1, 2), auf welchem die sendenden Busteilnehmer (7, 8) die Bussignale durch ein Kurzschliessen der Busspannung erzeugen, mindestens eine Bussignalempfangseinheit (3, 13), welche ein Busspeiseteil (14, 15, 16) zur Erzeugung der Busspannung mit einer beim Kurzschliessen definiert abfallenden Spannungs-Strom-Kennlinie(16') und eine das Kurzschliessen der Busspannung als Bussignale erkennende Signalauswerteschaltung (19) und Auswertelogik (21) aufweist, und mindestens eine Bussignalempfangseinheit (7, 8), **dadurch gekennzeichnet, dass** die Bussignalempfangseinheit (3, 13) ein Detektionsmittel (20) zur Unterscheidung von Bussignalen von einem Buskurzschluss mit einem Zeitglied sowie ein auf das Detektionsmittel ansprechendes Ausschalt/Einschaltmittel (15) für den Busspeiseteil aufweist.

9. 2-Draht-Busanordnung nach Anspruch 8, **dadurch gekennzeichnet, dass** die Bussignalsendeeinheit zum beliebig gepolten Anschluss an den Bus ausgestaltet ist, insbesonders durch den Einsatz eines Gleichrichters (29) als Buseingangselement.

10. Verwendung einer Bussignalempfangseinheit (3, 13) nach einem der Ansprüche 1 bis 7 bei einer Gebäudeinstallation, insbesondere für die Beleuchtungs- und/oder Storensteuerung.

11. Verfahren zur Installation einer 2-Draht-Busanordnung **dadurch gekennzeichnet, dass** an einer 2-Draht-Busleitung (1, 2) nur eine Bussignalempfangseinheit (3, 13) mit Busspeiseteil (14, 15, 16) nach einem der Ansprüche 1 bis 7 mit beliebiger Polung der Busspannung angeschlossen wird, und dass als weitere Busteilnehmer mindestens eine beliebig gepolt an die Busleitung anschliessbare und aus dieser gespiesene Bussignalsendeeinheit (7, 8) angeschlossen wird.

12. Verfahren zur Installation einer 2-Draht-Busandordnung **dadurch gekennzeichnet, dass** an einer 2-Draht-Busleitung (1, 2) mindestens zwei beliebig gepolt anschliessbare Bussignalempfangseinheiten (3, 13) mit jeweils einem Busspeiseteil (14, 15, 16) nach einem der Ansprüche 1 bis 7 mit beliebiger Polung der Busspannung angeschlossen werden, wobei nur der Busspeiseteil (14, 15, 16) einer der Bussignalempfangseinheiten (3) mit dem Bus in Speiseverbindung gebracht wird und dass die anderen Busspeiseteile (14, 15, 16) der anderen Bussignalempfangseinheiten (13) vom Bus getrennt bleiben, und dass als weitere Busteilnehmer mindestens eine beliebig gepolt an die Busspannung anschliessbare und aus dieser gespiesene Bussignalsendeeinheit (7, 8) angeschlossen wird.

13. Verfahren nach Anspruch 11 oder 12, **dadurch gekennzeichnet, dass** mindestens eine Bussignalsendeeinheit (7, 8) ein Infrarotsignalempfänger ist.

14. Anwendung des Verfahrens nach einem der Ansprüche 11 bis 13 bei der Erstellung einer Gebäudeinstallation, insbesondere einer Beleuchtungs- und/oder Storensteuerung.

## Claims

1. Bus signal reception unit (3, 13) for a 2-wire-bus (1, 2), on which the sending bus subscribers (7, 8) generate bus signals by short-circuiting the bus voltage, which bus signal reception unit comprises a bus supply stage (14, 15, 16) for generating the bus voltage with a defined falling voltage/current characteristic (16') during short-circuiting and an analysis circuitry (19) and analysis logic (21) recognizing a short-circuiting of bus voltage as bus signals, **characterised by** a detection device (20) with a timing element for the distinction between bus signals and a bus short-circuiting and an off/on switching device (15) for the bus supply stage responding to the detection device.

2. Bus signal reception unit (3, 13) according to claim 1, **characterised by** a deactivation device (17, 18), preferably a link plug, which enables disconnecting the bus supply stage (14, 15, 16) from the bus (1, 2).

3. Bus signal reception unit (3, 13) according to claim 1 or 2, **characterised in that** the detection device (20) comprises an inverse-polarity protection means (D3), which is adapted for switching off the bus supply stage of the bus signal reception unit (3) by means of the off/on switching device (15) in case of a further connected bus voltage of a further bus signal reception unit (13) with inverse-polarity compared to the bus voltage generated by the bus signal reception unit.

4. Bus signal reception unit (3, 13) according to claim 3, **characterised in that** the inverse-polarity protection means is adapted to generate a short circuit of the bus voltage upon application of the further inverse-polarity bus voltage.

5. Bus signal reception unit (3, 13) according to one of claims 1 to 4, **characterised in that** the timing element is a low pass (R9, C1) or a counter.

6. Bus signal reception unit (3, 13) according to one of claims 1 to 5 , **characterised in that** the signal analysis circuitry (19) is adapted for receiving polarity-independent bus signals.

7. Bus signal reception unit (3, 13) according to one of claims 1 to 6, **characterised in that** it is provided by a signal sending stage for sending bus signals.

8. A 2-wire-bus-arrangement comprising at least one 2-wire-bus (1, 2), on which the sending bus subscribers (7, 8) generate bus signals by short-circuiting the bus voltage, at least one bus signal reception unit (3, 13), which comprises a bus supply stage (14, 15, 16) for generating the bus voltage with a defined falling voltage/current characteristic (16') during short-circuiting and a signal analysis circuitry (19) and analysis logic (21) recognizing short-circuiting of the bus voltage as bus signals, and at least one bus signal sending unit (7, 8), **characterised in that** the bus signal reception unit (3, 13) comprises a detection device (20) with a timing element for the distinction between bus signals and a bus short-circuiting and an off/on switching device (15) for the bus supply stage responding to the detection device.

9. A 2-wire-bus-arrangement according to claim 8, **characterised in that** the bus signal sending unit is adapted for being connected with any polarity to the bus, in particular by the application of a rectifier (29) as bus access unit.

10. Use of the bus signal reception unit (3, 13) according to any of claims 1 to 7 for a building installation, in particular for the lighting control and/or the control of blinds.

11. Installation method for a 2-wire-bus-arrangement, **characterised in that** on a 2-wire-bus-line (1, 2) only one bus signal reception unit (3, 13) comprising a bus supply stage (14, 15, 16) according to one of the claims 1 to 7 is installed with arbitrary polarity of the bus voltage, and that as other bus subscribers at least one bus signal sending unit (7, 8) is installed, which fits any polarity of the bus line and is energised thereby.

12. Installation method for a 2-wire-bus-arrangement, **characterised in that** on a 2-wire-bus-line (1, 2) at least two bus signal reception units (3, 13) connectable with arbitrary polarity are installed with arbitrary polarity, which each comprise a bus supply stage (14, 15, 16) according to one of the claims 1 to 7, whereas only the bus supply stage (14, 15, 16) of one bus signal reception unit (3) is brought into feed connection with the bus, and that the bus supply stage (14, 15, 16) of other bus signal reception units (13) remain disconnected from the bus, and that as other bus subscribers at least one bus signal sending unit (7, 8) connectable with arbitrary polarity is installed at the bus voltage and is energised thereby.

13. Installation method according to claim 11 or 12, **characterised in that** at least one bus signal sending unit (7, 8) is an infrared signal receiver.

14. Application of the method according to any of the claims 11 to 13 during creation of a building installation, in particular a lighting control and/or a control for blinds.

## Revendications

1. Unité (3, 13) de réception pour signaux de bus pour un bus (1, 2) à deux fils, sur lequel les usagers (7, 8) du bus émettant sur le bus génèrent les signaux de bus en court-circuitant la tension du bus, l'unité de réception de signaux de bus comprenant un élément (14, 15, 16) d'alimentation du bus pour générer la tension du bus ayant une courbe (16') caractéristique courant/tension décroissante définie dans le cas du court-circuit de ladite tension du bus et un circuit (19) d'exploitation des signaux et une logique (21) d'exploitation, identifiant la mise en court-circuit de la tension du bus comme étant des signaux de bus, **caractérisée par** un moyen (20) de détection ayant un relais de temporisation pour différencier des signaux de bus par rapport au court-circuit d'un bus ainsi que par un moyen (15) de connexion/déconnexion répondant au moyen de détection pour l'élément d'alimentation du bus.

2. Unité (3, 13) de réception pour signaux de bus suivant la revendication 1, **caractérisée en ce que** ladite unité de réception pour signaux de bus est pourvue d'un moyen (17, 18) de désactivation, de préférence un pont enfichable, au moyen duquel l'élément (14, 15, 16) d'alimentation du bus peut être séparé du bus (1, 2).

3. Unité (3, 13) de réception pour signaux de bus suivant la revendication 1 ou 2, **caractérisée en ce que** le moyen (20) de détection présente un moyen (D3) d'irréversibilité, qui est conçu pour déconnecter l'élément d'alimentation du bus de l'unité (3) de réception pour signaux de bus au cas où on se trouve en présence d'une autre tension du bus, se trouvant sur le bus, polarisée par rapport à la tension du bus générée par l'unité de réception pour signaux de bus d'une autre unité (13) de réception pour signaux de bus à l'aide du moyen (15) de connexion/déconnexion.

4. Unité (3, 13) de réception pour signaux de bus suivant la revendication 3, **caractérisée en ce que** le moyen d'irréversibilité est conçu pour générer un court-circuit de la tension du bus au cas où l'on applique l'autre tension du bus polarisée.

5. Unité (3, 13) de réception pour signaux de bus suivant l'une des revendications 1 à 4, **caractérisée en ce que** le relais de temporisation est un passe-bas (R9, C1) ou un compteur.

6. Unité (3, 13) de réception pour signaux de bus suivant l'une des revendications 1 à 5, **caractérisée en ce que** le circuit (19) d'exploitation des signaux est conçu pour la réception, indépendante de la polarisation, de signaux de bus.

7. Unité (3, 13) de réception pour signaux de bus suivant l'une des revendications 1 à 6, **caractérisée en ce que** ladite unité de réception pour signaux de bus est équipée d'un élément d'émission de signaux pour la délivrance de signaux de bus.

8. Arrangement de bus à deux fils comprenant au moins un bus (1, 2) à deux fils, sur lequel les usagers (7, 8) du bus émettant sur le bus génèrent les signaux de bus en court-circuitant la tension du bus, au moins une unité (3, 13) de réception pour signaux de bus présentant un élément (14, 15, 16) d'alimentation du bus pour générer la tension du bus ayant une courbe (16') caractéristique courant/tension décroissante définie dans le cas d'un court-circuit et un circuit (19) d'exploitation des signaux et une logique (21) d'exploitation, identifiant la mise en court-circuit de la tension du bus comme étant des signaux de bus, et au moins une unité (7, 8) d'émission pour signaux de bus, **caractérisée en ce que** l'unité (3, 13) de réception pour signaux de bus présente un moyen (20) de détection pour différencier des signaux de bus par rapport au court-circuit d'un bus ayant un relais de temporisation ainsi qu'un moyen (15) de connexion/déconnexion répondant au moyen de détection.

9. Arrangement de bus à deux fils suivant la revendication 8, **caractérisé en ce que** l'unité d'émission pour signaux de bus est conçue pour la connexion polarisée de façon quelconque au bus, en particulier en insérant un redresseur (29) comme étant un élément d'entrée du bus.

10. Utilisation d'une unité (3, 13) de réception pour signaux de bus suivant l'une des revendications 1 à 7 pour une installation d'un bâtiment, en particulier pour la commande de l'éclairage et/ou de stores.

11. Procédé d'installation d'un arrangement de bus à deux fils **caractérisé en ce que** seulement une unité (3, 13) de réception pour signaux de bus ayant un élément (14, 15, 16) d'alimentation du bus suivant l'une des revendications 1 à 7 ayant une polarité quelconque de la tension du bus est connectée à une ligne (1, 2) de transfert de signaux pour bus à deux fils, et **en ce qu'**au moins une unité (7, 8) d'émission pour signaux de bus connectable à la ligne de transfert de signaux polarisée de façon quelconque et alimentée à partir de celle-ci est connectée en tant qu'usager supplémentaire du bus.

12. Procédé d'installation d'un arrangement de bus à deux fils **caractérisé en ce qu'**au moins deux unités (3, 13) de réception pour signaux de bus connectables et polarisées de façon quelconque ayant chacune un élément (14, 15, 16) d'alimentation du bus suivant l'une des revendications 1 à 7 ayant une polarité quelconque de la tension du bus sont connectées à une ligne (1, 2) de transfert de signaux pour bus à deux fils, procédé dans lequel seulement l'élément (14, 15, 16) d'alimentation du bus de l'une des unités (3) de réception pour signaux de bus est mis en communication d'alimentation avec le bus et **en ce que** les autres éléments (14, 15, 16) d'alimentation du bus des autres unités (13) de réception pour signaux de bus restent séparés du bus, et **en ce qu'**au moins une unité (7, 8) d'émission pour signaux de bus connectable à la tension de bus polarisée de façon quelconque et alimentée à partir de celle-ci est connectée en tant qu'usager supplémentaire du bus.

13. Procédé suivant la revendication 11 ou 12, **caractérisé en ce qu'**au moins une unité (7, 8) d'émission pour signaux de bus est un récepteur de signaux infrarouges.

14. Application du procédé suivant l'une des revendications 11 à 13 dans le cas de la construction d'une installation d'un bâtiment, en particulier d'une commande de l'éclairage et/ou de stores.
